# FASCICULE DE BREVET EUROPEEN

(11) **EP 3 692 286 B1**
(45) Date de publication et mention de la délivrance du brevet: **07.07.2021**
(21) Numéro de dépôt: 18762578.5
(22) Date de dépôt: 02.08.2018
(51) Int. Cl.: F16K 35/02, F16K 31/60, F17C 13/04, F16K 1/30, F16K 35/14, F16K 1/44, F16K 31/524

(54) **ROBINET ET RÉSERVOIR(S) DE FLUIDE SOUS PRESSION**
VENTIL UND RESERVOIR(E) FÜR UNTER DRUCK STEHENDE FLÜSSIGKEIT
VALVE AND RESERVOIR(S) FOR PRESSURIZED FLUID

(30) Priorité: 05.10.2017 FR 1701024; 05.10.2017 FR 1701025
(43) Date de publication de la demande: 12.08.2020
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: VIGNEROL, Samuel, 78330 Fontenay Le Fleury (FR); FRENAL, Antoine, 95460 Ezanville (FR); MULLER, Denis, 92500 Rueil Malmaison (FR); PAOLI, Hervé, 92500 Rueil-Malmaison (FR); LAMIABLE, Morgan, 57940 Metzervisse (FR); BROECHLER, Johan, 54190 Villerupt (FR); DI FILIPPO, Claudio, 57645 Noisseville (FR)
(74) Mandataire: Air Liquide
(86) Numéro de dépôt international: PCT/FR2018/052002
(87) Numéro de publication internationale: WO 2019/068974

(56) Documents cités:
- FR-A1- 2 974 402
- GB-A- 834 759

## Description

L'invention concerne un robinet et un réservoir ou ensemble de réservoirs de fluide sous pression.

L'invention concerne plus particulièrement un robinet pour fluide sous pression comprenant un corps abritant un circuit de fluide ayant une extrémité amont destinée à être mise en relation avec une réserve de fluide sous pression et extrémité aval destinée à être mise en relation avec un utilisateur de fluide, le circuit comprenant un ensemble de clapet(s) comprenant au moins un clapet d'obturation permettant de fermer ou d'ouvrir le circuit (3), le robinet comprend un organe de commande manuelle de l'ensemble de clapet(s), l'organe de commande étant monté mobile sur le corps entre une position de repos dans laquelle l'ensemble de clapet(s) est dans une position de fermeture du circuit et une position active dans laquelle l'organe de commande actionne l'ensemble de clapet(s) dans une position d'ouverture du circuit selon une première section d'ouverture, le robinet comprenant un mécanisme de verrouillage de l'organe de commande dans sa position de repos, le mécanisme de verrouillage comprenant un actionneur manuel monté mobile sur le corps entre une première position de verrouillage assurant un verrouillage de l'organe de commande pour empêcher son déplacement de sa position de repos vers sa position active, et une seconde position de déverrouillage de l'organe de commande permettant son déplacement de sa position de repos vers sa position active, dans sa seconde position de déverrouillage, l'actionneur actionnant l'ensemble de clapet(s) dans une position d'ouverture du circuit selon une seconde section d'ouverture.

Pour des raisons de sécurité, il est connu de prévoir un mécanisme de verrouillage de l'organe de commande manuelle de l'ouverture d'un clapet d'isolation d'un robinet de bouteille(s) de gaz sous pression (cf. par exemple FR2793297A1).

Un problème des robinets de ce type, notamment des robinets à levier ou à organe de commande rotatif de type « quart de tour », est le risque d'ouverture trop brusque du clapet. Ceci peut en effet générer sur les équipements aval qui y sont connectés un à-coup de pression important. Cette brusque montée en pression peut aussi se produire avec des vannes à volant lorsque l'opérateur manœuvre le volant trop rapidement.

Ce pic de pression peut abîmer un détendeur de pression situé en aval par le simple effet de la pression sur le mécanisme de détente (dégradation mécanique, fuite du détendeur, dérèglement des caractéristiques de détente...). Dans les cas où le gaz est un comburant (oxygène), il peut se créer une compression adiabatique (augmentation brusque de la température), qui peut conduire à l'inflammation des éléments non métallique du détendeur (joint, siège en plastique).

Une solution connue pour consiste à prévoir une ouverture progressive du robinet via un mécanisme de deux clapets concentriques actionnés séquentiellement par le levier cf. EP3062005A1. Quant à GB834759, il décrit un robinet selon le préambule de la revendication 1.

Ces solutions ne permettent de résoudre que de façon imparfaite ce problème.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce qu'il comporte un mécanisme de couplage du déplacement de l'organe de commande et de l'actionneur lorsque l'organe de commande est déplacé de sa position active vers sa position de repos et/ou de sa position de repos vers sa position active, le mécanisme de couplage déplaçant automatiquement l'actionneur lorsque l'organe de commande est déplacé.

Le robinet permet aux utilisateurs d'ouvrir progressivement une bouteille de gaz ou un ensemble de bouteilles de gaz (cadre) à haute pression (par exemple entre 150 et 300bar ou plus) en réduisant la vitesse de mise sous pression de tout équipement placé en aval de la vanne.

Le robinet assure également une sécurité contre une ouverture intempestive du robinet.

Par ailleurs, des modes de réalisation de l'invention peuvent comporter l'une ou plusieurs des caractéristiques suivantes :
- la seconde section d'ouverture est inférieure à la première section d'ouverture,
- l'actionneur comprend au moins l'un parmi : un levier articulé sur le corps, un bouton poussoir à déplacement en translation, un actionneur rotatif tel qu'un volant ou une molette,
- l'organe de commande comprend au moins l'un parmi : un levier articulé sur le corps, un bouton poussoir à déplacement en translation, un actionneur rotatif tel qu'un volant ou une molette,
- le déplacement de l'organe de commande de sa position de repos vers sa position active décrit un mouvement de nature différente ou de sens distinct, notamment un sens opposé, au mouvement de l'actionneur se déplaçant de sa première position de verrouillage vers sa seconde position de déverrouillage,
- le robinet comporte un organe de rappel de l'actionneur vers sa première position de verrouillage,
- le robinet comporte un mécanisme de maintien stable de l'organe de commande au moins dans sa position active,
- l'ensemble de clapet(s) comporte deux clapets d'obturation distincts mobiles par rapport à des sièges respectifs et définissant en position d'ouverture respectivement les deux sections d'ouverture distinctes, les deux clapets étant commandés respectivement par l'organe de commande et par l'actionneur,
- les deux clapets d'obturation distincts sont disposés en série dans une même conduite du circuit,
- les deux clapets d'obturation sont commandés par au moins un axe-poussoir mobile commandé par l'organe de commande et par l'actionneur,
- le déplacement de l'actionneur de sa première position de verrouillage vers sa seconde position de déverrouillage déplace le poussoir selon une première course actionnant l'ouverture d'un premier clapet(s) dans une position d'ouverture avec la seconde section d'ouverture du circuit, le déplacement ultérieur de l'organe de commande de sa position de repos vers sa position active déplaçant le poussoir selon une seconde course actionnant l'ouverture du second clapet dans une position d'ouverture du circuit avec la première section d'ouverture,
- le mécanisme de verrouillage de l'organe de commande dans sa position de repos comprend une butée mécanique mobile,
- l'organe de commande est un levier articulé sur le corps,
- le mécanisme de verrouillage de l'organe de commande dans sa position de repos agit sur une came solidaire du levier,
- le mécanisme de verrouillage de l'organe de commande dans sa position de repos comprend une butée mécanique entre un profil de la came de l'organe de commande et un organe mobile d'un mécanisme de transmission de mouvement entre la came et l'ensemble de clapet(s),
- l'actionneur est un levier articulé sur le corps,
- les deux leviers sont articulés sur le corps et comprennent chacun une came respective ayant un profil de came respectif et coopérant avec au moins un poussoir mobile de commande de l'ensemble de clapet(s) d'obturation,
- le mécanisme de couplage du déplacement de l'organe de commande et de l'actionneur est intégré aux cames des leviers,
- le mécanisme de couplage du déplacement de l'organe de commande et de l'actionneur comprend un axe solidaire d'au moins une came et au moins une gorge formée dans l'autre came et accueillant et guidant l'axe,
- l'actionnement de l'ensemble de clapet(s) par l'actionneur dans la position d'ouverture du circuit selon la seconde section d'ouverture est réalisé via un dispositif de transmission d'effort entre l'actionneur et l'ensemble de clapet(s), au moins une partie de ce dispositif de transmission d'effort pouvant faire partie du mécanisme de verrouillage,
- l'actionnement de l'ensemble de clapet(s) par l'organe de commande est réalisé via un dispositif de transmission d'effort entre l'organe de commande et l'ensemble de clapet(s), une partie de ce dispositif de transmission d'effort pouvant faire partie du mécanisme de verrouillage,
- la configuration de l'ensemble de clapets dans une position d'ouverture du circuit selon la seconde section d'ouverture est réalisée lorsque l'organe de commande est dans sa position de repos et que l'actionneur est déplacé dans sa seconde position de déverrouillage,
- le rapport entre la seconde section d'ouverture et la première section d'ouverture est compris entre 1/50 et 1/2 ou entre 1/100 et 1/20 et de préférence entre 1/10 et 1/5 ou entre 1/80 et 1/30,
- l'actionneur et l'organe de commande sont adjacents ou concentriques ou situés de façon distante, notamment sur des faces distinctes ou opposées du corps,
- le ou les clapets d'obturation comprennent au moins l'un parmi : un clapet mobile en translation relativement à un siège respectif et sollicité par un organe de rappel vers le siège, un clapet intégrant un orifice calibré permettant le passage d'un débit prédéterminé en position fermée correspondant à la première section d'ouverture du circuit et permettant un second débit de gaz en position ouverte correspondant à la première section d'ouverture du circuit, une bille sollicitée par un organe de rappel sur un siège,
- le mécanisme de verrouillage de l'organe de commande dans sa position de repos peut être du type mécanique et/ou magnétique et/ou pneumatique et/ou électromécanique et/ou hydraulique,
- le mécanisme de verrouillage de l'organe de commande est situé au moins en partie au niveau d'une des cames des leviers,
- le mécanisme de verrouillage de l'organe de commande dans sa position de repos comprend un axe solidaire d'au moins une came et au moins une gorge formée dans l'autre came et accueillant et guidant l'axe,

L'invention concerne également un réservoir ou ensemble de réservoirs de fluide sous pression, notamment de gaz sous pression comprenant un robinet conforme à l'une quelconque des caractéristiques ci-dessus ou ci-après.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant la structure et le fonctionnement d'un premier exemple de réalisation possible de l'invention,
- la figure 2 représente une vue en coupe, schématique et partielle, illustrant la structure et le fonctionnement d'un second exemple de réalisation possible de l'invention,
- les figures 3 et 4 représentent des vues en coupe, schématiques et partielles, illustrant la structure et le fonctionnement d'un troisième exemple de réalisation possible de l'invention et selon respectivement deux configurations distinctes d'utilisation,

- la figure 5 représente une vue en coupe, schématique et partielle, illustrant la structure et le fonctionnement d'un quatrième exemple de réalisation possible de l'invention,
- la figure 6 représente une vue schématique et partielle illustrant un exemple de principe de fonctionnement de l'invention,
- la figure 7 représente une vue en coupe, schématique et partielle, illustrant la structure et le fonctionnement d'un cinquième exemple de réalisation possible de l'invention,
- la figure 8 représente une vue de côté, schématique et partielle, illustrant un détail de la structure d'un robinet dans un sixième exemple de réalisation possible de l'invention et dans une première configuration d'utilisation,
- la figure 9 représente une vue en coupe agrandie d'un détail de la figure 8.
- la figure 10 représente une vue analogue à celle de la figure 8 illustrant un détail de la structure de la figure 8 dans une seconde configuration d'utilisation,
- la figure 11 représente une vue analogue à celle de la figure 10 et partiellement en transparence,
- la figure 12 représente une vue analogue à celle de la figure 8 dans une troisième configuration d'utilisation.

Le robinet 1 illustré aux figures comprend classiquement un corps 2 abritant un circuit 3 de fluide ayant une extrémité amont 4 destinée à être mis en relation avec une réserve de fluide sous pression et extrémité aval 5 destinée à être mise en relation avec un utilisateur de fluide.

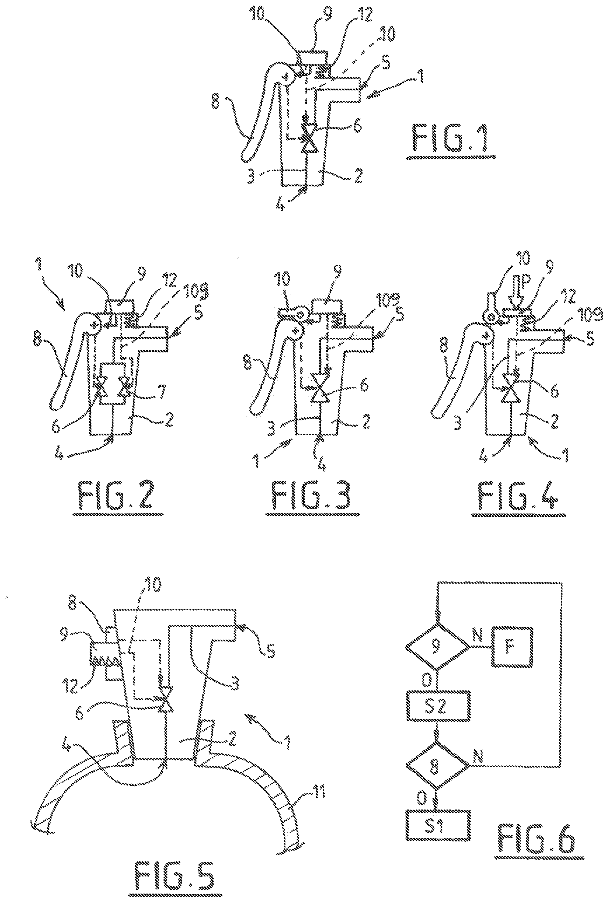

L'extrémité amont 4 peut être raccordée à une bouteille 11 de gaz sous pression (cf. figure 5) ou à une circuiterie reliée à une bouteille de gaz sous pression ou plusieurs bouteilles (cadre de bouteilles par exemple). A cet effet, l'extrémité correspondante du corps 2 du robinet 1 peut être filetée.

L'extrémité aval 5 débouche par exemple au niveau d'un raccord de sortie par exemple.

Le circuit 3 comprend un ensemble de clapet(s) comprenant au moins un clapet 6 d'obturation permettant de fermer ou d'ouvrir le circuit 3 (clapet d'isolation).

Le robinet 1 comprend un organe 8 de commande manuelle de l'ensemble de clapet(s) 6. Dans cet exemple, l'organe 8 de commande est un levier monté mobile sur le robinet 1. Le levier 8 de commande est mobile entre une position de repos (figure 1) dans laquelle l'ensemble de clapet(s) 6 reste fermé (par exemple via un organe de rappel tel qu'un ressort) qui correspond à une fermeture du circuit 3 et une position active dans laquelle l'organe 8 de commande actionne l'ensemble de clapet(s) 6 dans une position d'ouverture du circuit 3 selon une première section d'ouverture S1 (ouverture complète notamment). Par exemple, dans sa position active, l'extrémité libre du levier 8 est relevée (écartée du corps 2 du robinet 1).

Le robinet 1 comprend en outre un mécanisme de verrouillage de l'organe 8 de commande dans sa position de repos.

Le mécanisme de verrouillage comprend un actionneur 9 manuel monté mobile sur le corps 2 entre une première position de verrouillage assurant un verrouillage de l'organe 8 de commande pour empêcher son déplacement de sa position de repos vers sa position active, et une seconde position de déverrouillage de l'organe 8 de commande permettant son déplacement de sa position de repos vers sa position active.

C'est-à-dire que l'actionneur 9 manuel doit être actionné au préalable par l'utilisateur s'il veut déplacer le levier 8 de commande pour ouvrit le circuit 3.

Selon une particularité avantageuse, lorsque l'actionneur 9 est disposé dans sa seconde position de déverrouillage, l'actionneur 9 dispose l'ensemble de clapet(s) 6 dans une position d'ouverture du circuit 3 selon une seconde section S2 d'ouverture (ouverture partielle). Cf. par exemple la référence 109 aux figures 2 à 4 qui symbolise schématiquement un actionneur mécanique et/ou pneumatique et/ou hydraulique et/ou magnétique.

De préférence la seconde section d'ouverture S2 est inférieure à la première section d'ouverture S1 (les débits de soutirage correspondants sont ainsi distincts). Par exemple, le rapport S2/S1 entre la seconde section d'ouverture S2 et la première section d'ouverture S1 est compris entre 1/50 et 1/2 et de préférence entre 1/10 et 1/5. Ainsi, pour pouvoir ouvrir complètement le circuit 3 du robinet 1 via le levier 8, l'utilisateur doit donc au préalable actionner l'actionneur 9 distinct qui assure le déverrouillage du levier 8 de commande et ouvre partiellement le circuit.

Cf. par exemple la représentation schématique des figures 3 et 4 : une pression P sur l'actionneur 9 permet de déverrouiller le levier 8.

Cette configuration procure une double sécurité: 1) nécessité d'un déverrouillage limitant les ouvertures intempestives 2) le déverrouillage ouvre partiellement le circuit 3 ce qui réalise l'amorce d'une ouverture progressive et avertit l'utilisateur de la présence de gaz en sortie.

Ceci permet de réduire le pic de pression en aval en ralentissant la vitesse de mise en pression de la chambre aval du circuit gaz connecté à la sortie 5 du robinet 1.

La figure 6 illustre schématiquement le fonctionnement du robinet 1. Si l'actionneur 9 n'est pas activé (N) le circuit est fermé F. Si l'actionneur 9 est activé (O), le circuit 3 est ouvert avec une degré d'ouverture S2 qui permet ensuite l'actionnement du levier 8. L'actionnement du levier 8 de commande (O) permet d'ouvrir totalement le circuit (S1). Sinon (N) le robinet 1 revient dans sa position fermée ou ouverte selon la position de l'actionneur 9.

De préférence, le sens d'actionnement de l'actionneur 9 est opposé (par exemple translation/poussée vers le corps 2) au sens d'actionnement du levier 8 de commande (levier 8 de commande relevé pour s'écarter du corps).

Ainsi, le déplacement du levier 8 de commande de sa position de repos vers sa position active décrit de préférence un mouvement de nature différente (ou de sens distinct, notamment un sens opposé), au mouvement de l'actionneur 9 se déplaçant de sa première position de verrouillage vers sa seconde position de déverrouillage. Bien entendu le sens d'actionnement ou de déplacement de l'actionneur 9 (premier organe 9 de commande) de sa position verrouillage vers sa position de déverrouillage peut être identique ou similaire au sens d'actionnement ou de déplacement du levier 8 de commande sa position de repos vers sa position active. Par exemple, pour relever le levier 8 (pour l'écarter du corps) il faut au préalable relever l'actionneur 9 (l'écarter du corps) également d'une distance déterminée, par exemple quelques centimètres. Ces deux mouvements (levier 8 et actionneur 9) peuvent être parallèles. Les axes de rotation du levier 8 et de l'actionneur 9 peuvent notamment être parallèles.

De même, le retour de l'actionneur 9 dans sa position de verrouillage et le retour du levier 8 dans sa position fermée peuvent décrire des déplacements identiques ou sens identiques (par exemple vers le corps dans cet exemple).

Bien entendu, le levier 8 et l'actionneur 9 peuvent avoir eu variante des mouvements distincts (non parallèles et/ou de nature différente rotation/translation...).

Ainsi les mouvements du levier 8 et de l'actionneur 9 peuvent être des rotations de même sens ou de sens opposés.

Par exemple, lorsque l'actionneur 9 doit être tiré pour passer de sa position de verrouillage à sa position de déverrouillage, dans sa première position de verrouillage, l'actionneur 9 peut posséder une extrémité de préhension disposée le long ou en vis-à-vis de la face avant du corps 2 du robinet 1, (par exemple à une distance comprise entre zéro et 4 à 5 cm notamment entre 1 et 3 cm). En position de déverrouillage cette extrémité peut être écartée de 1 à 6 cm (ou plus de la face avant du corps 2 du robinet 1), par exemple écartée 3 à 5 cm de la face avant du corps du robinet 1. Inversement, dans le cas d'un actionneur 9 qui doit être poussé (vers le corps 2 du robinet), la position de verrouillage peut être écartée de 1 à 6 cm du corps du robinet et la position de déverrouillage peut être écartée du corps 2 de zéro à 3 cm.

Dans sa position de verrouillage et/ou dans sa position de déverrouillage l'actionneur 9 (ou une portion de préhension au moins de ce dernier) peut avoir le même écartement par rapport au corps 2 du robinet que l'organe 8 de commande (ou une portion de préhension de ce dernier) qui est dans sa position de repos.

De préférence également, l'actionneur 9 est monostable, c'est-à-dire que l'utilisateur doit maintenir l'effort sur ce dernier pour garder la course active, sinon il retourne automatiquement dans sa première position de verrouillage (circuit 3 fermé).

Pour cela, le robinet 1 peut comporter un organe 12 de rappel de l'actionneur 9 vers sa première position de verrouillage (ressort notamment). Alternativement, l'organe de rappel de l'actionneur 9 vers sa première position de verrouillage peut comprendre ou être constitué de la pression du fluide dans le circuit. C'est-à-dire que la pression de service du gaz dans le circuit peut assurer un effort sur l'actionneur 9 qui tend à le ramener dans sa première position.

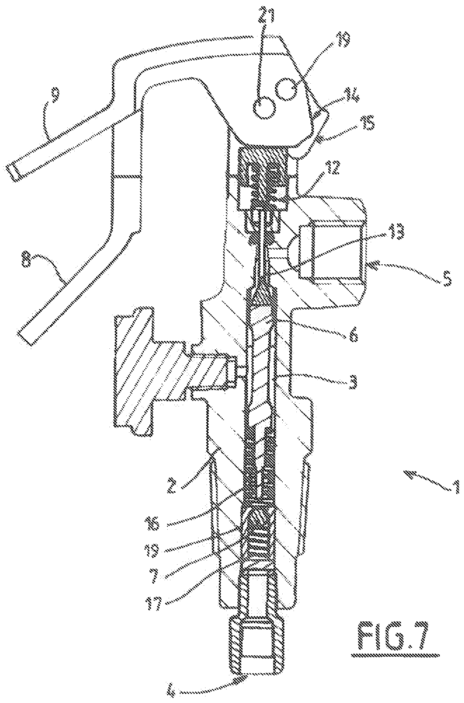

Les deux degrés d'ouverture S1, S2 du circuit 3 peuvent être réalisés via un unique clapet 6 ayant deux positions d'ouverture respectives. De préférence cependant, les deux degrés d'ouverture (S1 S2) sont réalisés via deux clapets 6, 7 distincts (cf. figures 2 ou 7).

De préférence, le levier 8 de commande a une course qui est bistable. C'est-à-dire que ses les positions de repos et active sont stables. Par exemple, un mécanisme de point-dure, butée (profil de came 14 du levier 8) assure ces positions stables. L'utilisateur peut relâcher le levier 8 de commande en position active sans que ceci ne provoque la fermeture du circuit 3.

De préférence, la fermeture du circuit 3 (à partir d'une position grande ouverte S1) est réalisée d'un seul geste. De préférence le levier 8 de commande et l'actionneur 9 sont déplacés ensemble en position initiale (circuit fermé) via un mécanisme de couplage du déplacement de l'organe 8 de commande et de l'actionneur 9. Par exemple, ce mécanisme de couplage sollicite automatiquement l'actionneur 9 vers sa première position lorsque l'organe 8 de commande est déplacé de sa position active vers sa position de repos.

De préférence, la manipulation des deux organes 8, 9 est possible d'une seule main (dans le sens de l'ouverture et/ou dans le sens de la fermeture du circuit).

Comme illustré à la figure 5, l'organe 8 de commande et l'actionneur 9 peuvent être deux boutons poussoirs et/ou rotatifs, par exemple concentriques. L'actionneur 9 et l'organe 8 de commande peuvent cependant être tout type d'organe (levier, bouton, sélecteur rotatif...) adjacents ou concentriques ou situés de façon distante, notamment sur des faces distinctes ou opposées du corps 2 du robinet 1.

Dans les exemples des figures 7 à 12 l'organe 8 de commande et l'actionneur 9 sont deux leviers 8, 9 adjacents et articulés sur le corps 2.

Comme illustré à la figure 7, le robinet 1 peut comporter deux clapets 6, 7 d'obturation distincts mobiles par rapport à des sièges respectifs et définissant respectivement, selon leur séquence d'ouverture (l'un 6 ouvert puis les deux 6, 7 ouverts), les deux sections d'ouverture distinctes S2, S1).

Comme illustré, les deux clapets 6, 7 d'obturation distincts peuvent être disposés en série dans le circuit 3. Ce premier clapet 6 est par exemple mobile en translation par rapport à un siège et contraint vers le siège. En position fermée le premier clapet 6 peut fermer de façon étanche le circuit.

En position fermée, le second clapet 7 ferme de façon non étanche le circuit 3. C'est-dire que le second clapet 7 comprend un orifice calibré définissant la seconde section S2 d'ouverture du circuit 3.

Le second clapet 7 comprend par exemple une bille 7 poussée vers un siège par un ressort 17. Par exemple, la bille 7 est en appui non étanche sur un siège (par exemple une douille) avec un espacement prédéterminé (section d'ouverture S2).

Le passage (seconde section d'ouverture S2) entre la bille 7 et le siège (douille) peut être obtenu en altérant la ligne d'étanchéité entre la bille et son siège par un brochage, un trait de scie ou autre outil sur la bille ou sur son siège. La bille 7 peut ne pas être parfaitement cylindrique (boule à facettes, bille poreuse, ou de tout autre forme pour permettre au gaz de passer avec un débit limité).

Une autre solution alternative est de placer un orifice calibré en parallèle de ce second clapet 7, pour assurer le passage limité du gaz. Alternativement cet orifice calibré peut passer au travers du corps du clapet 7.

Ainsi, lors de l'actionnement (par exemple une poussée vers le corps ou respectivement une traction l'éloignant du corps) du levier actionneur 9, une came 15 de ce levier 9 déplace le premier clapet 6 via un mécanisme 109 de transmission de mouvement. Le mécanisme 109 de transmission de mouvement peut comprendre notamment un ou plusieurs axes-poussoirs 13, 18 en série (ou en parallèle), un organe élastique 12 (ressort notamment pour rattraper les jeux et/ou maintenir un contact dans la chaine de transmission de mouvement entre la came 15 et le clapet 6). Tout autre mécanisme de transmission de mouvement peut être envisagé. On pourra par exemple se référer au document FR2828922A1.

L'actionnement du levier actionneur 9 déplace le mécanisme de transmission de mouvement d'une première course qui déplace à son tour le premier clapet 6 qui ouvre le circuit 3 au niveau du premier clapet 6. Le gaz qui est admis à passer via l'orifice calibré du second clapet 7 peut ainsi s'échapper vers la seconde extrémité 5 du circuit 3. Le gaz provenant de la première extrémité 4 du circuit 3 passe en effet entre la bille 7 et la douille 19 puis entre corps 2 et le clapet 6 et peut sortir du robinet 1.

Le système de verrouillage du levier 8 de commande peut être localisé au niveau de la came 14 de ce dernier.

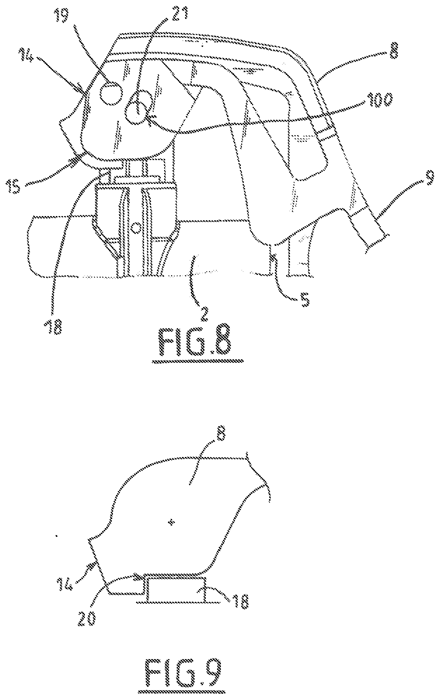

Par exemple, le profil de la came 14 du levier 8 de commande peut comporter une forme 20 qui vient buter sur une forme complémentaire du mécanisme de transmission de mouvement (et notamment l'extrémité d'un poussoir 18 cf. figure 9). En position haute (actionneur 9 en position de verrouillage cf. figures 7, 8 ou 9), le mécanisme de transmission de mouvement (et notamment l'extrémité d'un poussoir 18) forme une butée mécanique empêchant la rotation du levier 8 de commande.

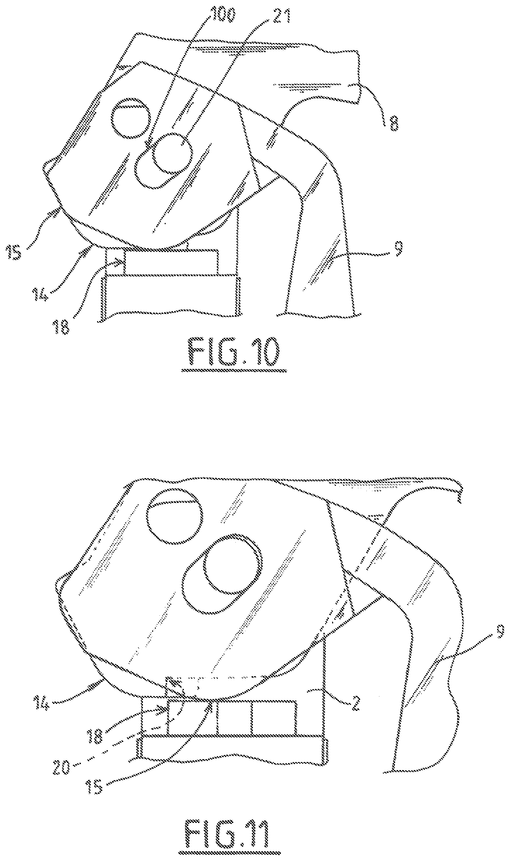

En position basse (actionneur 9 en position de déverrouillage, cf. figure 10 ou 11), le mécanisme de transmission de mouvement (et notamment l'extrémité d'un poussoir 18) est escamoté et ne forme plus une butée mécanique empêchant la rotation du levier 8 de commande.

A l'issue de cette première course, le levier 8 de commande est ainsi déverrouillé et un débit réduit de gaz est libéré.

Cette première course permet ainsi de positionner le poussoir 18 au-delà d'un angle de butée au niveau du profil 20 de came 14.

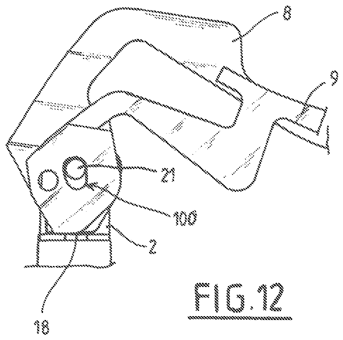

Le levier 8 de commande peut ensuite être pivoté à son tour (par exemple pour s'écarter du corps) pour déplacer le mécanisme 18, 13 un peu plus loin (seconde course) cf. figure 12. Cette seconde course permet de séparer le second clapet 7 (bille) de son siège (via l'extrémité du premier clapet 6).

Dans cette configuration, le circuit 3 est ouvert de façon plus importante (totalement, première section d'ouverture S1). Ceci permet au gaz un grand débit et une monté en pression plus rapide en aval des clapets.

Comme illustré dans l'exemple de la figure 12, lorsque le levier 8 de commande est relevé (position active) le levier 9 d'actionnent peut (ou éventuellement doit) lui aussi être relevé. Bien entendu en variante le levier 9 d'actionnement pourrait rester en position basse (près du corps lorsque le levier 8 de commande est relevé en position active).

Ainsi, les deux clapets 6, 7 peuvent être sont commandés par un même mécanisme de transmission de mouvement et notamment au moins un même poussoir 18, 13 mobile.

Ce mécanisme de transmission de mouvement peut se translater de deux courses différentes, l'une courte permettant un débit limité (seconde section S2 d'ouverture), l'autre longue permettant le plein débit (première section d'ouverture S1).

Bien entendu l'invention n'est pas limitée à l'exemple des figures décrites ci-dessus. Les mécanismes à levier 8, 9 peuvent être remplacé par des volants rotatifs ou autre. Par exemple la ou les cames 14, 15 pourraient être actionnées par des volants rotatifs.

Les deux courses du mécanisme de transmission de mouvement peuvent être pilotées par des cames avec des axes de rotation 21, 19 des leviers 8, 9 identiques (confondus) ou distincts.

De préférence, la (re)fermeture complète des deux clapets 6, 7 peut être réalisée en un seul geste qui permet de neutraliser les deux clapets 6, 7 dans la même action manuelle.

Par exemple, un mécanisme de couplage du déplacement de l'organe 8 de commande et de l'actionneur 9 peut être intégré aux cames 14, 15 des leviers.

Par exemple, un axe 21 solidaire d'au moins une came 28 peut être reçu dans au moins une gorge 100 formée dans l'autre came 15 et accueillant et guidant l'axe 21.

Ainsi le déplacement du levier 8 de commande vers sa position repos provoque également le retour du levier 9 d'actionnement vers sa position de verrouillage.

Inversement, lorsque le levier 9 d'actionnement a été positionné dans sa seconde position de déverrouillage, le déplacement du levier 8 de commande vers sa position active (par exemple relevée) peut entraîner également le déplacement du levier 9 d'actionnement (relèvement par exemple).

Bien entendu, l'invention n'est pas limitée aux exemples ci-dessus. Par exemple, le mécanisme de verrouillage pourrait être intégré au niveau des cames 14, 15 via un système d'axes 21 et gorges du même type que celui du mécanisme de couplage. De même, ce mécanisme de verrouillage de l'organe 8 de commande pourrait être localisé ailleurs sur le robinet. De plus ce mécanisme de verrouillage pourrait être du type magnétique et/ou pneumatique et/ou électromécanique et/ou hydraulique.

On conçoit donc que, tout en étant de structure simple et peu coûteuse, l'invention présente de nombreux avantages.

Cette structure de robinet permet également d'autres fonctionnalités pour l'utilisateur. Ainsi, l'actionnement bref uniquement de l'actionneur 9 permet à l'utilisateur de générer un jet de gaz suffisant et contrôlé pour purger/nettoyer l'aval du circuit 3 et notamment le raccord de sortie. Ceci est notamment une mesure recommandée par les fabricants de robinets.

## Revendications

1. Robinet pour fluide sous pression comprenant un corps (2) abritant un circuit (3) de fluide ayant une extrémité amont (4) destinée à être mise en relation avec une réserve (11) de fluide sous pression et extrémité aval (5) destinée à être mise en relation avec un utilisateur de fluide, le circuit (3) comprenant un ensemble de clapet(s) (6, 7) comprenant au moins un clapet d'obturation permettant de fermer ou d'ouvrir le circuit (3), le robinet (1) comprend un organe (8) de commande manuelle de l'ensemble de clapet(s) (6, 7), l'organe (8) de commande étant monté mobile sur le corps (2) entre une position de repos dans laquelle l'ensemble de clapet(s) (6, 7) est dans une position de fermeture du circuit (3) et une position active dans laquelle l'organe (8) de commande actionne l'ensemble de clapet(s) (6, 7) dans une position d'ouverture du circuit (3) selon une première section d'ouverture (S1), le robinet (1) comprenant un mécanisme (9, 10) de verrouillage de l'organe (8) de commande dans sa position de repos, le mécanisme (9, 10) de verrouillage comprenant un actionneur (9) manuel monté mobile sur le corps (2) entre une première position de verrouillage assurant un verrouillage de l'organe (8) de commande pour empêcher son déplacement de sa position de repos vers sa position active, et une seconde position de déverrouillage de l'organe (8) de commande permettant son déplacement de sa position de repos vers sa position active, dans sa seconde position de déverrouillage, l'actionneur (9) actionnant l'ensemble de clapet(s) (6, 7) dans une position d'ouverture du circuit (3) selon une seconde section (S2) d'ouverture, **caractérisé en ce qu'**il comporte un mécanisme (21, 100) de couplage du déplacement de l'organe (8) de commande et de l'actionneur (9) lorsque l'organe (8) de commande est déplacé de sa position active vers sa position de repos et/ou de sa position de repos vers sa position active, le mécanisme de couplage (21, 100) déplaçant automatiquement l'actionneur (9) lorsque l'organe (8) de commande est déplacé.

2. Robinet selon la revendication 1, **caractérisé en ce que** la seconde section d'ouverture (S2) est inférieure à la première section d'ouverture (S1).

3. Robinet selon la revendication 1 ou 2, **caractérisé en ce que** l'actionneur (9) comprend au moins l'un parmi : un levier articulé sur le corps (2), un bouton poussoir à déplacement en translation, un actionneur rotatif tel qu'un volant ou une molette.

4. Robinet selon l'une quelconque des revendications 1 à 3, **caractérisé en ce que** l'organe (8) de commande comprend au moins l'un parmi : un levier articulé sur le corps, un bouton poussoir à déplacement en translation, un actionneur rotatif tel qu'un volant ou une molette.

5. Robinet selon l'une quelconque des revendications 1 à 4, **caractérisé en ce que** le déplacement de l'organe (8) de commande de sa position de repos vers sa position active décrit un mouvement de même nature, notamment de même sens, que le mouvement de l'actionneur (9) se déplaçant de sa première position de verrouillage vers sa seconde position de déverrouillage.

6. Robinet selon l'une quelconque des revendications 1 à 4, **caractérisé en ce que** le déplacement de l'organe (8) de commande de sa position de repos vers sa position active décrit un mouvement de nature différente ou de sens distinct, notamment un sens opposé, au mouvement de l'actionneur (9) se déplaçant de sa première position de verrouillage vers sa seconde position de déverrouillage.

7. Robinet selon l'une quelconque des revendications 1 à 6, **caractérisé en ce qu'**il comporte un organe (12) de rappel de l'actionneur (9) vers sa première position de verrouillage.

8. Robinet selon l'une quelconque des revendications 1 à 7, **caractérisé en ce qu'**il comporte un mécanisme (14) de maintien stable de l'organe (8) de commande au moins dans sa position active.

9. Robinet selon l'une quelconque des revendications 1 à 8, **caractérisé en ce que** l'ensemble de clapet(s) comporte deux clapets (6, 7) d'obturation distincts mobiles par rapport à des sièges respectifs et définissant en position d'ouverture respectivement les deux sections d'ouverture distinctes (S1, S2), les deux clapets (6, 7) étant commandés respectivement par l'organe (8) de commande et par l'actionneur (9).

10. Robinet selon la revendication 9, **caractérisé en ce que** les deux clapets (6, 7) d'obturation distincts sont disposés en série dans une même conduite du circuit (3).

11. Robinet selon la revendication 10, **caractérisé en ce que** les deux clapets (6, 7) d'obturation sont commandés par au moins un axe-poussoir (13, 18) mobile commandé par l'organe (8) de commande et par l'actionneur (9).

12. Robinet selon la revendication 11, **caractérisé en ce que** le déplacement de l'actionneur (9) de sa première position de verrouillage vers sa seconde position de déverrouillage déplace le poussoir (13, 18) selon une première course actionnant l'ouverture d'un premier clapet(s) (6) dans une position d'ouverture avec la seconde section d'ouverture (S2) du circuit (3) et **en ce que** le déplacement ultérieur de l'organe (8) de commande de sa position de repos vers sa position active déplace le poussoir (13) selon une seconde course actionnant l'ouverture du second clapet (7) dans une position d'ouverture du circuit (3) avec la première section d'ouverture (S1).

13. Robinet selon l'une quelconque des revendications 1 à 12, **caractérisé en ce que** le mécanisme (9, 10) de verrouillage de l'organe (8) de commande dans sa position de repos comprend une butée (10, 18, 20) mécanique mobile.

14. Robinet selon l'une quelconque des revendications 1 à 13, **caractérisé en ce que** l'organe (8) de commande est un levier articulé sur le corps (2).

15. Robinet selon la revendication 14, **caractérisé en ce que** le mécanisme (9, 10, 18) de verrouillage de l'organe (8) de commande dans sa position de repos agit sur une came (14, 20) solidaire du levier (8).

16. Robinet selon la revendication 15, **caractérisé en ce que** le mécanisme (9, 10) de verrouillage de l'organe (8) de commande dans sa position de repos comprend une butée mécanique entre un profil (20) de la came (14) de l'organe (8) de commande et un organe (18) mobile d'un mécanisme de transmission de mouvement entre la came (14) et l'ensemble de clapet(s) (6, 7).

17. Robinet selon l'une quelconque des revendications 1 à 16, **caractérisé en ce que** l'actionneur (9) est un levier articulé sur le corps (2).

18. Robinet selon la revendication 17 combinée à l'une quelconque des revendications 14 à 16, **caractérisé en ce que** les deux leviers (8, 9) sont articulés sur le corps (2) et comprennent chacun une came (14, 15) respective ayant un profil de came respectif et coopérant avec au moins un poussoir (13, 18) mobile de commande de l'ensemble de clapet(s) (6, 7) d'obturation.

19. Réservoir ou ensemble de réservoirs de fluide sous pression, notamment de gaz sous pression comprenant un robinet conforme à l'une quelconque des revendications 1 à 18.

## Patentansprüche

1. Hahn für unter Druck stehendes Fluid, umfassend einen Körper (2), der einen Fluidkreislauf (3) aufnimmt, der ein stromaufwärtiges Ende (4) aufweist, das dazu bestimmt ist, mit einem Vorrat (11) von unter Druck stehendem Fluid verbunden zu sein, und ein stromabwärtiges Ende (5), das dazu bestimmt ist, mit einem Fluidabnehmer verbunden zu sein, wobei der Kreislauf (3) einen Satz von Klappen (6, 7) umfasst, der zumindest eine Verschlussklappe umfasst, die es ermöglicht, den Kreislauf (3) zu öffnen oder zu schließen, der Hahn (1) umfasst ein Organ (8) zur manuellen Steuerung des Satzes von Klappen (6, 7) umfasst, wobei das Steuerorgan (8) beweglich zwischen einer Ruheposition, in der sich der Satz von Klappen (6, 7) in einer Position zum Schließen des Kreislaufs (3) befindet, und einer aktiven Position, in der das Steuerorgan (8) den Satz von Klappen (6, 7) in eine Position zum Öffnen des Kreislaufs (3) entlang eines ersten Öffnungsabschnitts (S1) bringt, am Körper (2) montiert ist, wobei der Hahn (1) einen Mechanismus (9, 10) zum Verriegeln des Steuerorgans (8) in seiner Ruheposition umfasst, wobei der Verriegelungsmechanismus (9, 10) einen manuellen Aktor (9) umfasst, der beweglich zwischen einer ersten Verriegelungsposition, die eine Verriegelung des Steuerorgans (8) gewährleistet, um seine Verschiebung aus seiner Ruheposition in seine aktive Position zu verhindern, und einer zweiten Position zur Entriegelung des Steuerorgans (8), die seine Verschiebung aus seiner Ruheposition in seine aktive Position ermöglicht, am Körper (2) montiert ist, wobei der Aktor (9) in seiner zweiten Entriegelungsposition den Satz von Klappen (6, 7) in eine zweite Position zum Öffnen des Kreislaufs (3) entlang eines zweiten Öffnungsabschnitts (S2) bringt, **dadurch gekennzeichnet, dass** er einen Mechanismus (21, 100) zum Koppeln der Bewegung des Steuerorgans (8) und des Aktors (9) umfasst, wenn das Steuerorgan (8) aus seiner aktiven Position in seine Ruheposition und/oder aus seiner Ruheposition in seine aktive Position bewegt wird, wobei der Kopplungsmechanismus (21, 100) den Aktor (9) automatisch bewegt, wenn das Steuerorgan (8) bewegt wird.

2. Hahn nach Anspruch 1, **dadurch gekennzeichnet, dass** der zweite Öffnungsabschnitt (S2) kleiner als der erste Öffnungsabschnitt (S1) ist.

3. Hahn nach Anspruch 1 oder 2, **dadurch gekennzeichnet, dass** der Aktor (9) zumindest eines der folgenden Elemente umfasst: einen am Körper (2) angelenkten Hebel, einen translatorisch bewegbaren Druckknopf, einen Drehaktor, beispielsweise ein Handrad oder ein Drehrad.

4. Hahn nach einem der Ansprüche 1 bis 3, **dadurch gekennzeichnet, dass** das Steuerorgan (8) zumindest eines der folgenden Elemente umfasst: einen am Körper angelenkten Hebel, einen translatorisch bewegbaren Druckknopf, einen Drehaktor, beispielsweise ein Handrad oder ein Drehrad.

5. Hahn nach einem der Ansprüche 1 bis 4, **dadurch gekennzeichnet, dass** die Bewegung des Steuerorgans (8) aus seiner Ruheposition in seine aktive Position eine Bewegung gleicher Art, insbesondere gleicher Richtung, beschreibt wie die Bewegung des Aktors (9), der sich aus seiner ersten Verriegelungsposition in seine zweite Entriegelungsposition bewegt.

6. Hahn nach einem der Ansprüche 1 bis 4, **dadurch gekennzeichnet, dass** die Bewegung des Steuerorgans (8) aus seiner Ruheposition in seine aktive Position eine Bewegung anderer Art oder anderer Richtung, insbesondere entgegengesetzter Richtung, beschreibt als die Bewegung des Aktors (9), der sich aus seiner ersten Verriegelungsposition in seine zweite Entriegelungsposition bewegt.

7. Hahn nach einem der Ansprüche 1 bis 6, **dadurch gekennzeichnet, dass** er ein Organ (12) zum Zurückstellen des Aktors (9) in seine erste Verriegelungsposition umfasst.

8. Hahn nach einem der Ansprüche 1 bis 7, **dadurch gekennzeichnet, dass** er einen Mechanismus (14) zum stabilen Halten des Steuerorgans (8) zumindest in seiner aktiven Position umfasst.

9. Hahn nach einem der Ansprüche 1 bis 8, **dadurch gekennzeichnet, dass** der Satz von Klappen zwei getrennte Absperrklappen (6, 7) umfasst, die relativ zu jeweiligen Sitzen beweglich sind und in der Öffnungsposition jeweils die beiden getrennten Öffnungsabschnitte (S1, S2) definieren, wobei die beiden Klappen (6, 7) durch das Steuerorgan (8) bzw. den Aktor (9) gesteuert werden.

10. Hahn nach Anspruch 9, **dadurch gekennzeichnet, dass** die beiden getrennten Absperrklappen (6, 7) in einer gleichen Leitung des Kreislaufs (3) in Reihe angeordnet sind.

11. Hahn nach Anspruch 10, **dadurch gekennzeichnet, dass** die beiden Absperrklappen (6, 7) durch zumindest einen vom Steuerorgan (8) bzw. vom Aktor (9) gesteuerten beweglichen Stößel (13, 18) gesteuert werden.

12. Hahn nach Anspruch 11, **dadurch gekennzeichnet, dass** die Bewegung des Aktors (9) aus seiner ersten Verriegelungsposition in seine zweite Entriegelungsposition den Stößel (13, 18) entlang eines ersten Hubs bewegt, der die Öffnung einer oder mehrerer erster Klappe(n) (6) in eine Öffnungsposition mit dem zweiten Öffnungsabschnitt (S2) des Kreislaufs (3) bewirkt, und dass die anschließende Bewegung des Steuerorgans (8) aus seiner Ruheposition in seine aktive Position den Stößel (13) entlang eines zweiten Hubs bewegt, der die Öffnung der zweiten Klappe (7) in eine Öffnungsposition des Kreislaufs (3) mit dem ersten Öffnungsabschnitt (S1) bewirkt.

13. Hahn nach einem der Ansprüche 1 bis 12, **dadurch gekennzeichnet, dass** der Mechanismus (9, 10) zur Verriegelung des Steuerorgans (8) in seiner Ruheposition einen beweglichen mechanischen Anschlag (10, 18, 20) umfasst.

14. Hahn nach einem der Ansprüche 1 bis 13, **dadurch gekennzeichnet, dass** das Steuerorgan (8) ein am Körper (2) angelenkter Hebel ist.

15. Hahn nach Anspruch 14, **dadurch gekennzeichnet, dass** der Mechanismus (9, 10, 18) zum Verriegeln des Steuerorgans (8) in seiner Ruheposition auf einen fest mit dem Hebel (8) verbundenen Nocken (14, 20) wirkt.

16. Hahn nach Anspruch 15, **dadurch gekennzeichnet, dass** der Verriegelungsmechanismus (9, 10) des Steuerorgans (8) in seiner Ruheposition einen mechanischen Anschlag zwischen einem Profil (20) des Nockens (14) des Steuerorgans (8) und einem beweglichen Organ (18) eines Mechanismus zur Übertragung der Bewegung zwischen dem Nocken (14) und dem Satz von Klappen (6, 7) umfasst.

17. Hahn nach einem der Ansprüche 1 bis 16, **dadurch gekennzeichnet, dass** der Aktor (9) ein am Körper (2) angelenkter Hebel ist.

18. Hahn nach Anspruch 17 in Verbindung mit einem der Ansprüche 14 bis 16, **dadurch gekennzeichnet, dass** die beiden Hebel (8, 9) am Körper (2) angelenkt sind und jeweils einen Nocken (14, 15) umfassen, der ein jeweiliges Nockenprofil aufweist und mit zumindest einem beweglichen Stößel (13, 18) zur Steuerung des Satzes von Absperrklappen (6, 7) zusammenwirkt.

19. Behälter oder Behältersatz für unter Druck stehendes Fluid, insbesondere unter Druck stehendes Gas, umfassend einen Hahn nach einem der Ansprüche 1 bis 18.

## Claims

1. Valve for pressurized fluid comprising a body (2) housing a fluid circuit (3) having an upstream end (4) intended to be placed in communication with a reserve (11) of pressurized fluid and a downstream end (5) intended to be placed in communication with a user of fluid, the circuit (3) comprising a collection of valve shutter(s) (6, 7) comprising at least one shutoff valve shutter allowing the circuit (3) to be closed or opened, the valve (1) comprises a member (8) for manually controlling the collection of valve shutter(s) (6, 7), the control member (8) being mounted with the ability to move on the body (2) between a rest position in which the collection of valve shutter (s) (6, 7) is in a position in which the circuit (3) is closed and an active position in which the control member (8) actuates the collection of valve shutter(s) (6, 7) into a position in which the circuit (3) is open with a first bore section (S1), the valve (1) comprising a mechanism (9, 10) for locking the control member (8) in its rest position, the locking mechanism (9, 10) comprising a manual actuator (9) mounted with the ability to move on the body (2) between a locked first position that locks the control member (8) to prevent it from moving from its rest position toward its active position, and a second position in which the control member (8) is unlocked allowing it to move from its rest position toward its active position, in its unlocked second position, the actuator (9) placing the collection of valve shutter(s) (6, 7) in a position in which the circuit (3) is open to a second bore section (S2), **characterized in that** it comprises a coupling mechanism (21, 100) that couples the movement of the control member (8) and of the actuator (9) when the control member (8) is moved from its active position toward its rest position and/or from its rest position toward its active position, the coupling mechanism (21, 100) automatically moving the actuator (9) when the control member (8) is moved.

2. Valve according to Claim 1, **characterized in that** the second bore section (S2) is smaller than the first bore section (S1).

3. Valve according to Claim 1 or 2, **characterized in that** the actuator (9) comprises at least one of the following: a lever articulated to the body (2), a push-button to be moved in translation, a rotary actuator such as a handwheel or a knob.

4. Valve according to any one of Claims 1 to 3, **characterized in that** the control member (8) comprises at least one of the following: a lever articulated to the body, a push-button to be moved in translation, a rotary actuator such as a handwheel or a knob.

5. Valve according to any one of Claims 1 to 4, **characterized in that** the movement of the control member (8) from its rest position toward its active position describes a movement of the same nature, notably in the same direction, as the movement of the actuator (9) moving from its locked first position toward its unlocked second position.

6. Valve according to any one of Claims 1 to 4, **characterized in that** the movement of the control member (8) from its rest position toward its active position describes a movement of a different nature or in a distinct direction, notably in the opposite direction, compared with the movement of the actuator (9) moving from its locked first position toward its unlocked second position.

7. Valve according to any one of Claims 1 to 6, **characterized in that** it comprises a return member (12) returning the actuator (9) toward its locked first position.

8. Valve according to any one of Claims 1 to 7, **characterized in that** it comprises a retaining mechanism (14) providing stable retention of the control member (8) at least in its active position.

9. Valve according to any one of Claims 1 to 8, **characterized in that** the collection of valve shutter(s) comprises two distinct shut-off valve shutters (6, 7) able to move with respect to respective seats and in the open position respectively defining the two distinct bore sections (S1, S2), the two valve shutters (6, 7) being controlled by the control member (8) and by the actuator (9), respectively.

10. Valve according to Claim 9, **characterized in that** the two distinct shut-off valve shutters (6, 7) are arranged in series in the one same line of the circuit (3).

11. Valve according to Claim 10, **characterized in that** the two shutoff valve shutters (6, 7) are controlled by at least one mobile pushrod (13, 18) controlled by the control member (8) and by the actuator (9).

12. Valve according to Claim 11, **characterized in that** the movement of the actuator (9) from its locked first position toward its unlocked second position moves the pushrod (13, 18) over a first travel that actuates the opening of a first valve shutter(s) (6) into an open position with the second bore section (S2) for the circuit (3), and **in that** the subsequent movement of the control member (8) from its rest position toward its active position moves the pushrod (13) over a second travel actuating the opening of the second valve shutter (7) into a position in which the circuit (3) is open with the first bore section (S1).

13. Valve according to any one of Claims 1 to 12, **characterized in that** the locking mechanism (9, 10) for locking the control member (8) in its rest position comprises a mobile mechanical stop (10, 18, 20).

14. Valve according to any one of Claims 1 to 13, **characterized in that** the control member (8) is a lever articulated to the body (2).

15. Valve according to Claim 14, **characterized in that** the locking mechanism (9, 10, 18) for locking the control member (8) in its rest position acts on a cam (14, 20) attached to the lever (8).

16. Valve according to Claim 15, **characterized in that** the locking mechanism (9, 10) that locks the control member (8) in its rest position comprises a mechanical stop between a profile (20) of the cam (14) of the control member (8) and a mobile member (18) of a mechanism transmitting movement between the cam (14) and the collection of valve shutter(s) (6, 7).

17. Valve according to any one of Claims 1 to 16, **characterized in that** the actuator (9) is a lever articulated to the body (2).

18. Valve according to Claim 17 combined with any one of Claims 14 to 16, **characterized in that** the two levers (8, 9) are articulated to the body (2) and each comprise a respective cam (14, 15) having a respective cam profile and collaborating with at least one mobile pushrod (13, 18) for control of the collection of shutoff valve shutter(s) (6, 7).

19. Reservoir or collection of reservoirs for pressurized fluid, notably for pressurized gas, comprising a valve according to any one of Claims 1 to 18.
